# NEW EUROPEAN PATENT SPECIFICATION

(11) **EP 0 553 909 B2**
(45) Date of publication and mention of the opposition decision: **03.03.1999**
(45) Mention of the grant of the patent: 10.04.1996
(21) Application number: 93200128.2
(22) Date of filing: 19.01.1993
(51) Int. Cl.: B23K 1/20, B65B 67/00

(54) **Method for soldering pipes**
Verfahren zum Löten von Rohren
Méthode de soudage de tubes

(30) Priority: 28.01.1992 NL 9200155
(43) Date of publication of application: 04.08.1993
(73) Proprietor: PERFECTA CHEMIE B.V., NL-4462 EX Goes (NL)
(72) Inventor: Van Dijk, Martinus, NL-3136 PM Vlaardingen (NL)
(74) Representative: Bartelds, Erik

(56) References cited:
- DE-U- 9 005 852
- FR-A- 1 198 600
- FR-A- 2 276 528
- NL-A- 7 107 318
- Ihr Vorteil Hartlöten, Degussa, Nr. 10, April 1963

## Description

The invention relates to a Method for soldering pre-treated outer ends of pipes for joining which are brought together in a fitting, having a prescribed play with respect to said pipes wherein at least one solid solder element is arranged previously against the innerwall of said fitting, using a flux for said soldering material, bringing the outer end of each of said pipes in close contact with said solid element, and heating said fitting and pipe end(s) for melting said solid solder element.

Pipes and tubes for use in for instance gas systems and cold and hot water systems can be mutually connected in different ways. Compression couplings can for instance be used. These are expensive however and have the additional disadvantage that no further corrections can be made to the join once the compression coupling has been arranged.

In addition the extremities of the pipes for connecting can be joined by means of soldering. This requires a large number of operations such as applying flux to the inside of a fitting and on the extremities of the pipes, sliding the fitting and the pipes into one another, subsequently heating the join and applying a small quantity of solder on the fitting extremities at the moment the solder can flow at the correct temperature. These operations not only demand much time and experience but also a comparatively large amount of material. In addition, two hands are needed continuously to perform these operations.

Another drawback is that the flux used during soldering can burn prematurely due to overheating caused by direct contact with the burner or prolonged heating.

DE-U-9005852 describes a pre-fabricated fitting comprising a thin cylinder of solder with an integral ring. Pipes are pushed in the fitting, the fitting is heated and a connection is established. The production of the fitting is rather complicated and comprises the mechanical deformation of a solder ring to form the cylinder, the application of flux on the outside of the cylinder, placing the cylinder in the fitting and pressing the cylinder against the inner wall of the fitting.

The present invention has for its object to obviate the above drawbacks and to provide a comparatively simple and inexpensive method for soldering pre-treated outer ends of pipes for joining which are placed together in a fitting.

This is achieved by the invention by arranging said solid solder element in an annular-like fashion forming just a separate ring, applying said flux to the outside of each extremity of said pipe before entering said pipe end into said fitting, said ring having a predetermined volume suited to fill at least the prescribed play between pipe and fitting, so when heated the element will come out of the fitting in liquid state.

Prior to arrangement of the solder element a flux is applied to the extremities for joining. The flux is also spread over the inner wall of the fitting when the pipes are pushed into the fitting. Because the flux no longer comes into direct contact with the burner the danger of overheating, and thereby burning, is eliminated.

The solder element is heated until the element comes out of the fitting in liquid state. This is a direct indication to the user that the connection is successful. The flux residue is pressed outward by the liquid solder whereby the danger of corrosion is avoided.

Because the objects for joining are pipes the solder element is annular. The solder elements can have different dimensions geared to particular applications.

Two annular solder elements are preferably used, wherein the one element connects the one pipe extremity to the fitting while the other element serves to connect the other pipe extremity to the fitting.

The invention further relates to the use of a solder element in the method according to the invention. The element takes the form of a ring and consists of solder, such as for instance an alloy of tin and silver.

The present invention is further elucidated with reference to the annexed drawing, in which corresponding reference numerals refer to corresponding components, and in which:
fig. 1 shows the applying of the flux and the arranging of the solder elements;
fig. 2 shows the heating of the solder elements; and
fig. 3 shows the final result.

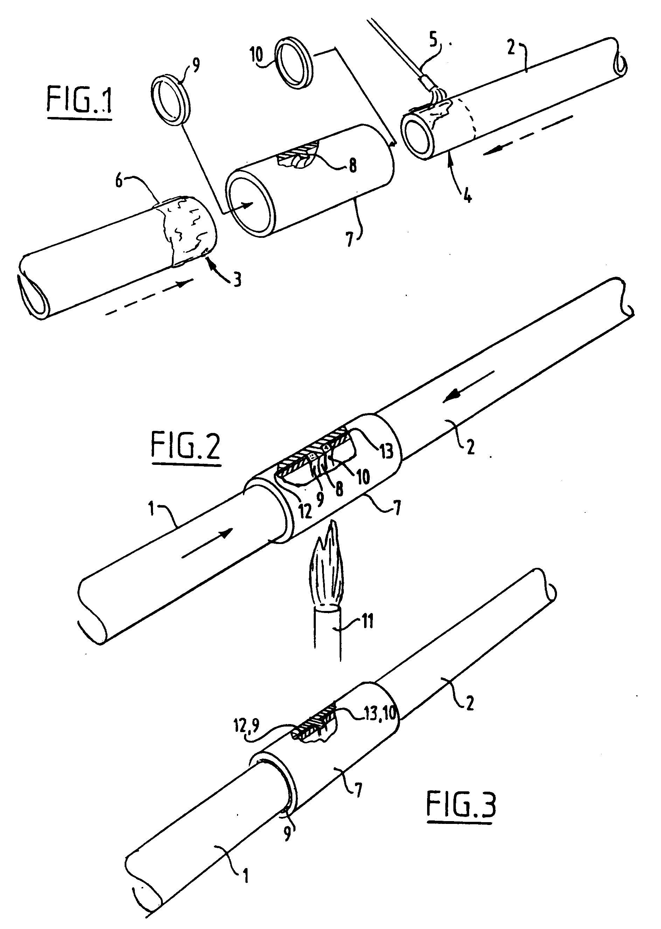

Fig. 1 shows two pipes 1 and 2 on the extremities 3 and 4 of which flux 6 is applied, for instance by means of a brush 5. Situated in the fitting 7 is an annular stop 8 against which the solder elements 9 and 10 are placed. Pipes 1 and 2 are subsequently placed in the fitting 7 whereby the flux 6 is also distributed over the inner wall of the fitting.

Fig. 2 shows the actual soldering. Both solder elements 9 and 10 are situated in the fitting 7 and are clamped therein by pipes 1 and 2. The fitting is then heated by means of a burner 11 whereby the solder elements 9 and 10 melt and spread into the spaces 12 and 13 between fitting 7 and the respective pipes 1 and 2.

Finally, fig. 3 shows the end result. The spaces 12 and 13 are completely filled with solder coming from the elements 9 and 10. Both pipes 1 and 2 can optionally be pushed further into the fitting in order to occupy the original position of the solder elements. It can also be seen that the solder escapes from the fitting to the outside (9).

The present invention provides a rapid and simple manner of soldering pipes, wherein a 100% certain connection can be obtained because of the possibility of a visual check.

## Claims

1. Method for soldering pre-treated outer ends of pipes (2) for joining which are brought together in a fitting (7), having a prescribed play with respect to said pipes wherein at least one solid solder element (9, 10) is arranged previously against the innerwall of said fitting (7), using a flux for said soldering material, bringing the outer end of each of said pipes in close contact with said solid element (9 or 10), and heating said fitting and pipe end(s) for melting said solid solder element (9 and/or 10), **characterized in that** said solder element is arranged in an annular-like fashion forming just a separate ring, applying said flux to the outside of each extremity of said pipe before entering said pipe end into said fitting, said ring having a predetermined volume suited to fill at least the prescribed play between pipe and fitting, so when heated the element will come out of the fitting in liquid state.

2. Method as claimed in claim 1, characterized in that at least one of the pipes (2) is pushed further into the fitting in order to occupy the original position of the solder elements.

3. Use of a solder element in the method of claims 1-2, wherein the solder element is a ring.

## Patentansprüche

1. Verfahren zur Verlötung vorbehandelter äußerer Enden von Rohren (2) zur Verbindung dieser Rohre, die in einer Armatur (7) zusammengebracht werden, die ein vorgeschriebenes Spiel gegenüber den Rohren hat, wobei wenigstens ein festes Lötelement (9, 10) vorher gegen die Innenwand der Armatur (7) gelegt und ein Flußmittel für das Lötmaterial benutzt wird und wobei das äußere Ende eines jeden Rohres in enge Berührung mit dem festen Lötelement (9 oder 10) gebracht und die Armatur und das Rohrende bzw. die Rohrenden erhitzt werden, um das feste Lötelement (9 und/oder 10) zu schmelzen,
dadurch gekennzeichnet, daß das feste Lötelement ringförmig ausgebildet ist und gerade einen getrennten Ring bildet, daß das Flußmittel auf die Außenseite eines jeden Endes des Rohres aufgebracht wird, bevor das Rohrende in die Armatur eingelegt wird, daß der Ring ein solches vorbestimmtes Volumen aufweist, daß wenigstens das vorgeschriebene Spiel zwischen Rohr und Armatur ausgefüllt wird, so daß bei der Erhitzung das Element aus der Armatur in flüssiger Form austritt.

2. Verfahren nach Anspruch 1,
dadurch gekennzeichnet, daß wenigstens eines der Rohre (2) weiter in die Armatur eingedrückt wird, um die ursprüngliche Lage der Lötelemente einzunehmen.

3. Benutzung eines Lötelementes im Verfahren der Ansprüche 1 und 2, wobei das Lötelement als Ring ausgebildet ist.

## Revendications

1. Méthode de soudage pour l'assemblage des extrémités extérieures préalablement préparées de tubes (2), mises en contact à l'intérieur d'un raccord (7), ayant un jeu prescrit relativement auxdits tubes, dans laquelle au moins une charge de soudure à l'état solide (9, 10) est disposée préalablement contre la paroi intérieure dudit raccord (7), en utilisant un flux pour la soudure, en portant l'extrémité externe de chacun desdits tubes en contact étroit avec ladite charge solide (9 ou 10), et en chauffant ledit raccord et l'(les) extrémité(s) de tube pour fondre ladite charge de soudure solide (9 et/ou 10), caractérisée en ce que ladite charge de soudure est agencée d'une façon annulaire formant juste un anneau séparé, en appliquant ledit flux à l'extérieur de chacune des extrémités dudit tube avant d'introduire ladite extrémité de tube dans ledit raccord, ledit anneau ayant un volume prédéterminé adapté pour remplir au moins le jeu prescrit entre le tube et le raccord, de sorte que lorsqu'il est chauffé l'élément s'écoule à l'extérieur du raccord à l'état fondu.

2. Méthode selon la revendication 1, caractérisée en ce qu'au moins un des tubes (2) est poussé plus avant à l'intérieur du raccord de manière à prendre la place initialement occupée par les charges de soudure.

3. Application d'une charge de soudure à la méthode selon la revendication 1 ou 2, dans laquelle la charge de soudure est un anneau.
